# FASCICULE DE BREVET EUROPEEN

(11) **EP 2 818 402 B1**
(45) Date de publication et mention de la délivrance du brevet: **18.09.2019**
(21) Numéro de dépôt: 14000476.3
(22) Date de dépôt: 11.02.2014
(51) Int. Cl.: B64C 1/00, H02G 3/00, H02G 3/30, H02G 3/32, H02G 3/34, B64C 7/02, B64C 27/04

(54) **Système de liaison d'un véhicule pourvu d'un harnais, véhicule et procédé de fabrication**
Verbindungssystem eines Fahrzeugs, das mit einem Gurtzeug ausgestattet ist, Fahrzeug und Herstellungsverfahren
System for connecting a vehicle provided with a harness, vehicle and manufacturing method

(30) Priorité: 28.06.2013 FR 1301534
(43) Date de publication de la demande: 31.12.2014
(73) Titulaire: Airbus Helicopters, 13725 Marignane Cedex (FR)
(72) Inventeur: Chuc, Charles, F-13012 Marseille (FR); Imbert, Nicolas, F-13008 Marseille (FR)
(74) Mandataire: GPI & Associés

(56) Documents cités:
- EP-A1- 0 588 174
- EP-A1- 1 713 153
- WO-A1-2009/004399
- DE-A1- 19 628 850
- DE-A1- 19 911 152
- DE-A1-102007 012 737
- DE-A1-102007 060 030
- US-A1- 2012 103 685

## Description

La présente invention concerne un système de liaison d'un véhicule pourvu d'un harnais, un véhicule comprenant un tel système de liaison et un procédé de fabrication de ce système de liaison.

Un aéronef comporte usuellement des harnais acheminant par exemple de l'énergie électrique ou des informations vers des équipements. Un harnais est usuellement muni d'une pluralité de fils cheminant en parallèle dans l'aéronef, et de connecteurs reliés aux fils. Un fil peut être un fil électrique ou encore une fibre optique par exemple.

Le harnais peut comprendre des fils rassemblés au sein de câbles, un câble représentant un ensemble de fils. De même, le harnais peut comprendre des torons dénommés par commodité « torons de fils » dans la mesure où un toron comprend un ensemble de fils ou de câbles.

En résumé, un fil est un élément unitaire, un câble comprend un ensemble de fils, un toron comprend un ensemble de fils et/ou de câbles, et un harnais comprend un ensemble de fils habituellement sous forme de torons et des connecteurs.

Néanmoins, le harnais peut comporter des tronçons cheminant sur un revêtement extérieur d'un véhicule. Un toron de fils de fort diamètre situé à l'extérieur d'un véhicule tend alors à dégrader les performances aérodynamiques de ce véhicule, notamment dans le cadre d'un aéronef. De plus, les moyens de fixation permettant la fixation des fils du harnais au revêtement extérieur tendent aussi à présenter une traînée aérodynamique pénalisante.

De plus, l'air en circulation autour du véhicule tend à déplacer le toron de fils par rapport au revêtement extérieur du véhicule. Il en résulte un phénomène d'usure connu sous le terme «chaffing » en langue anglaise. L'usure des fils est d'autant plus marquée lorsque le revêtement extérieur comporte du carbone. Pour éviter ce phénomène, un constructeur tend à éloigner les fils du revêtement extérieur, mais un tel éloignement est encore plus pénalisant d'un point de vue aérodynamique.

En outre, la force induite par le vent sur un aéronef est importante, notamment lors d'un vol d'avancement à des vitesses relativement élevées et lors d'intempéries. Les fils doivent alors être solidement attachés au revêtement extérieur pour éviter d'être arrachés de ce revêtement extérieur.

Par ailleurs, un harnais peut comprendre non pas un toron de fils, mais un assemblage de fils sous forme de nappe.

Une nappe comprend usuellement des fils accolés deux à deux.

Selon une réalisation, les fils sont moulés dans une gaine pour obtenir une nappe.

Selon une autre réalisation, les fils sont tressés entre eux.

Conformément à une autre réalisation, les fils sont des fils à section ronde ou carré collés deux à deux.

Ces technologies sont intéressantes. Cependant, la réparation ou le remplacement d'un fil est une opération semblant délicate à réaliser lorsque chaque fil est solidarisé à un autre fil.

Par conséquent, l'état de la technique actuel suggère soit d'utiliser des torons de fils, soit des nappes de fils. Le toron de fils présente l'inconvénient d'être encombrant et donc d'induire des contraintes aérodynamiques pénalisantes, les nappes de fils paraissant quant à elles difficilement réparables. En outre, quelle que soit la technologie appliquée, un risque d'usure par frottement n'est pas à exclure.

Le document GB 706168 décrit une méthode et un dispositif pour assembler des fils à proximité les uns des autres. Ce dispositif comprend une bande encerclant les fils. La bande est munie d'encoches, deux encoches étant séparées par une longueur correspondant sensiblement au diamètre des fils. Des liants en forme de U traversent alors les encoches pour isoler chaque fil au sein de la bande.

Ce document GB 706168 parait assez bien adapté à un harnais composé de fils de même diamètre. Cependant, les fils d'un harnais d'un véhicule peuvent présenter des diamètres très différents. Dès lors, un fil de petit diamètre risque de bouger au sein d'un dispositif selon le document GB 706168 prévu pour un fil de grand diamètre.

Le document GB 415196 présente une épingle pour agrafer des fils, ou encore des tuyaux.

L'épingle est munie de deux branches reliées par une section élastique permettant le rapprochement des branches l'une par rapport à l'autre. Chaque branche comprend une série de corrugations de manière à présenter une succession de creux et de bosses, les bosses d'une branche étant en vis-à-vis du creux de l'autre branche pour permettre l'insertion d'un fil entre les branches.

Les extrémités libres des branches sont reliées entre elles par un dispositif de fermeture.

Le document WO 00/6926 présente une épingle munie d'un socle et d'une barre pouvant être articulée à chaque extrémité du socle via un axe. La barre présente une succession de creux et des bosses.

Le document WO 00/6926 décrit un support en forme de H muni de deux branches verticales reliées par une branche horizontale. La branche horizontale est pliable afin que les branches verticales soient fixées l'une à l'autre.

Les documents GB 706168, GB 415196, WO 00/6926 et WO 00/6926 présentent des dispositifs de liaison pour lier des fils entre eux. Cependant, les fils semblent pouvoir être soumis au phénomène de « chaffing », notamment en dehors de ces dispositifs de liaison.

On connait par ailleurs des documents de l'invention, à savoir le document DE 199 11 152, DE 10 2007 012737, DE 196 28 850, EP 0 588 174, DE 10 2007 060030, EP 1 713 153, WO 2009/004399 et US 2012/103685.

Par exemple, le document DE 199 11 152 décrit une moquette munie d'une couche décorative et d'une couche de base accueillent des câbles.

Le document DE 10 2007 012737 présente un tube ondulé rempli d'une mousse à l'aide d'injecteurs, le tube ondulé étant traversé par un faisceau de câblage.

Le document DE 196 28 850 présente un harnais comprenant des câbles agencés entre deux couches de résine.

La présente invention a alors pour objet de proposer un système de liaison muni d'un harnais pour au moins limiter les risques d'apparition d'usure sous l'effet de frottement des fils du harnais, et pour présenter une traînée aérodynamique limitée.

Selon l'invention, un système de liaison comprend un harnais muni d'un ensemble de fils.

Chaque fil peut comporter un unique élément filiforme permettant la transmission d'un courant électrique ou encore de données et de signaux sous une forme électrique ou optique, au travers de brins par exemple dans le cadre d'un fil électrique ou d'une fibre dans le cadre d'une fibre optique.

De plus, ce système de liaison comporte une mousse inférieure et une mousse supérieure formant un sandwich enserrant les fils, chaque fil étant compressé isolément entre la mousse supérieure et la mousse inférieure, le système de liaison comprenant une gouttière aérodynamique, le sandwich étant disposé dans la gouttière.

On entend par « compressé isolément » le fait que chaque fil soit indépendant d'un fil adjacent, de manière à être remplacé isolément par exemple. Deux fils adjacents peuvent éventuellement se toucher localement mais ne sont pas soumis à un déplacement relatif générant le phénomène de « chaffing ».

Ainsi, le système de liaison comporte un sandwich de mousses enserrant en son sein les fils du harnais. Le sandwich est disposé dans la gouttière.

La mousse supérieure et la mousse inférieure peuvent avoir des élasticités différentes. De plus, au moins une mousse peut avoir subi un traitement de surface de type glaçage par exemple, pour que la surface de la mousse en contact avec les fils soit douce et donc non abrasive.

Dès lors, le système de liaison représente un système relativement profilé générant une traînée aérodynamique minimisée, comparée à un toron de fils. On verra par la suite que les fils peuvent être coplanaires. Dès lors, la gouttière peut aussi être relativement plate de manière à générer une traînée aérodynamique minimisée.

En outre, la gouttière protège le sandwich et donc les fils contre des agressions extérieures.

La gouttière remplit par exemple le rôle d'un blindage. Ainsi, au lieu de blinder une pluralité de fils, on protège ces fils avec une gouttière. En fonction du nombre de fils et de leurs longueurs, l'invention peut induire une réduction de masse intéressante. La gouttière peut comprendre un blindage contre les interférences électromagnétiques, en comprenant par exemple une grille métallique.

L'utilisation d'une gouttière faisant office de capot présente donc de multiples avantages.

Par ailleurs, les fils sont noyés dans un sandwich réalisé à l'aide d'une mousse inférieure et d'une mousse supérieure. Par suite, les fils ne risquent pas de frotter contre la gouttière ou le revêtement extérieur d'un véhicule. De plus, les fils étant compressés entre la mousse inférieure et la mousse supérieure, les risques de frottement et/ ou de chevauchement entre deux fils sont réduits.

Cet agencement tend alors à réduire les risques d'apparition du phénomène de « chaffing ».

De plus, les fils étant isolés les uns des autres, la réparation et/ou le remplacement d'un fil devient possible, contrairement à une nappe prévoyant d'accoler des fils les uns aux autres.

De même, il est possible d'agencer des fils ayant des caractéristiques différentes, et par exemple de diamètres différents. En effet, on comprend que le sandwich de mousses tolère des variations de diamètre d'un fil à l'autre.

En outre, les fils étant isolés, le système de liaison autorise une liberté de mouvement permettant l'agencement de connecteurs usuels. Ces connecteurs du harnais sont aussi disposés entre la mousse inférieure et la mousse supérieure.

Enfin, le système de liaison peut présenter un coût de fabrication intéressant.

Par suite, la synergie des organes du système de liaison lui confère une pluralité d'avantages étonnants.

Le système de liaison peut de plus comporter une ou plusieurs des caractéristiques additionnelles qui suivent.

Par exemple, le système de liaison peut être muni d'un moyen de fixation pour fixer la mousse supérieure à un revêtement extérieur d'un véhicule. Un tel moyen de fixation peut comprendre un moyen de collage par exemple ou tout autre moyen de fixation connu, tel que des vis enfoncées dans la mousse pour ne pas blesser les fils.

Le système de liaison peut être muni d'un dispositif de fixation pour fixer la mousse inférieure à une paroi interne de la gouttière. Un tel dispositif de fixation peut comprendre un moyen de collage par exemple ou tout autre moyen de fixation connu, tel que des vis enfoncées dans la mousse pour ne pas endommager les fils
En outre, le système de liaison peut être muni d'un système de fixation pour fixer la gouttière à un revêtement extérieur d'un véhicule. Ce système de fixation peut comprendre des vis, des boulons ou équivalent par exemple.

Le système de liaison comporte éventuellement au moins un lien de maintien pour suspendre la gouttière à un revêtement extérieur d'un véhicule. La gouttière est éventuellement suspendue sous le revêtement extérieur pour permettre la mise en place des fils du harnais par exemple.

La mousse inférieure et la mousse supérieure peuvent aussi être solidarisées aux fils de manière à former un bloc pouvant être fixé à un revêtement extérieur d'un véhicule.

Par ailleurs, l'ensemble de fils peut être plat, les fils étant contenus dans un plan, ce plan présentant une épaisseur supérieure ou égale au plus grand diamètre des fils. L'ensemble de fils s'apparente à une nappe, en tentant néanmoins de ne pas en présenter les inconvénients.

En outre, le système de liaison peut comporter au moins une épingle de cheminement maintenant les fils à plat les uns à côté des autres dans un plan, ce plan présentant une épaisseur supérieure ou égale au plus grand diamètre desdits fils.

Chaque épingle permet alors de positionner les fils à plat. Un telle épingle présente l'avantage de pouvoir être fabriquée facilement et à moindre coût.

Une épingle peut avoir une forme de C en comportant deux branches reliées par un arc permettant un déplacement relatif des branches au travers de pincements ou encore en étant tordue par exemple. Ainsi, on peut déformer chaque épingle pour enserrer chaque fil dans un logement.

A cet effet, au moins une branche peut présenter des corrugations de manière à former des logements par le biais d'une succession de creux et de bosses.

Selon une version, les deux branches s'entrecroisent en formant des croisillons, chaque croisillon séparant transversalement chaque fil d'un fil adjacent.

Selon une autre version, le système de liaison comporte une frette tressée autour d'au moins une épingle, la frette séparant transversalement chaque fil d'un fil adjacent.

Dès lors, on tresse une frette autour de l'épingle pour d'une part maintenir l'épingle autour des fils, et d'autre part, fixer les fils à l'épingle en prenant soin de séparer chaque fil d'un fil adjacent.

En fonction de la version, les croisillons ou la frette visent notamment à éviter un frottement destructeur entre les fils, tout en permettant le retrait ultérieur de l'épingle pour remplacer ou réparer un fil par exemple.

De plus, l'épingle est éventuellement réalisée à partir du matériau PA66 qui tend à minimiser le phénomène de « chaffing » entre l'épingle et les fils.

Outre un système de liaison, l'invention vise un véhicule muni d'un revêtement extérieur communiquant avec un milieu situé à l'extérieur du véhicule, le véhicule ayant au moins un système de liaison fixé à ce revêtement extérieur. Dès lors, ce système de liaison est du type décrit précédemment, la gouttière étant fixée au revêtement extérieur, le sandwich étant compressé entre le revêtement extérieur et une paroi interne de la gouttière.

Le véhicule peut être un véhicule terrestre, maritime ou volant, tel qu'un giravion ou une fusée par exemple.

En outre, l'invention vise un procédé de fabrication d'un système de liaison selon l'invention d'un tel véhicule au cours duquel :
- on dispose les fils entre la mousse inférieure et la mousse supérieure de manière à former un sandwich agencé dans la gouttière,
- on comprime lesdits fils entre la mousse inférieure et la mousse supérieure en fixant la gouttière contre ledit revêtement extérieur.

De plus, on peut disposer les fils entre la mousse inférieure et la mousse supérieure de manière à former un sandwich agencé dans la gouttière en :
- fixant la mousse supérieure au revêtement extérieur.
- fixant la mousse inférieure sur une paroi interne de la gouttière,
- disposant les fils dans la gouttière

Ce procédé rend aussi facile une éventuelle réparation. Il suffit en effet de démonter la gouttière du revêtement extérieur pour accéder aux fils et aux éventuels connecteurs.

De plus, on peut confectionner un ensemble de fils plat en maintenant les fils à plat les uns à côté des autres dans un plan à l'aide d'au moins une épingle de cheminement, ce plan présentant une épaisseur supérieure ou égale au plus grand diamètre desdits fils, puis on dispose cet ensemble de fils entre la mousse inférieure et la mousse supérieure.

L'invention et ses avantages apparaîtront avec plus de détails dans le cadre de la description qui suit avec des exemples de réalisation donnés à titre illustratif en référence aux figures annexées qui représentent :
- la figure 1, une vue d'un véhicule selon l'invention,
- la figure 2, une coupe transversale d'un système de liaison,
- la figure 3, une vue de dessus schématique d'un ensemble de fils à plat,
- les figures 4 à 5, des vues d'épingles de cheminement en l'absence de fils, et
- les figures 6 et 7, des vues d'épingles de cheminement enserrant des fils.

Les éléments présents dans plusieurs figures distinctes sont affectés d'une seule et même référence.

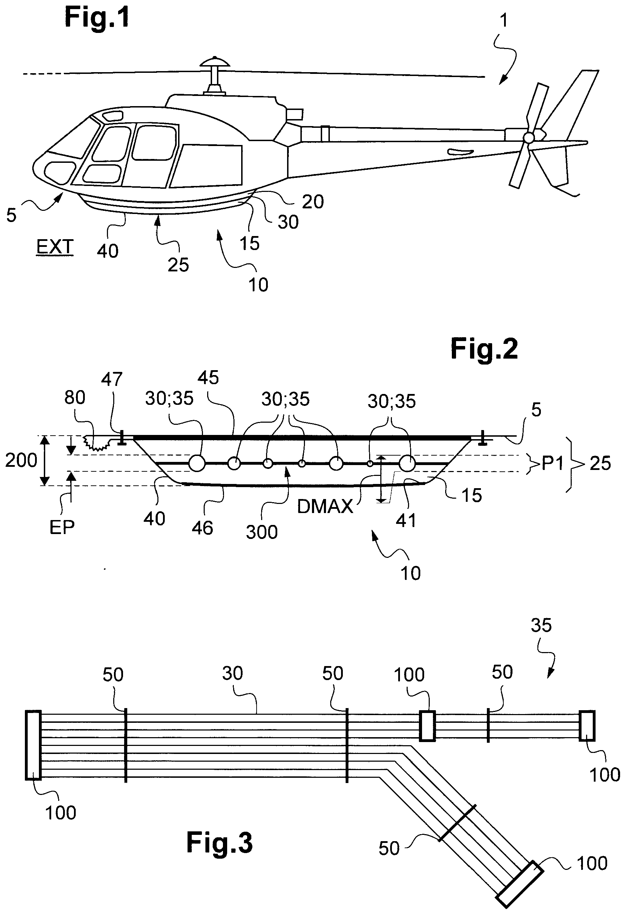

La figure 1 présente un véhicule 1, et ne particulier un aéronef. Ce véhicule comporte une structure 2 qui est munie d'un revêtement extérieur 5 en contact avec un milieu extérieur EXT au véhicule 1. Ce véhicule 1 comporte un système de liaison 10 fixé notamment sur le revêtement extérieur 5, le système de liaison 10 étant alors en contact avec le milieu extérieur EXT.

Le système de liaison 10 est pourvu d'une gouttière 40 aérodynamique qui est fixée au revêtement extérieur 2. La gouttière 40 permet de ménager un espace interne protégé contre le revêtement extérieur 2, cet espace interne étant délimité par la gouttière et le revêtement extérieur. De plus, cette gouttière peut être profilée pour générer une traînée aérodynamique réduite.

Le système de liaison 10 comprend alors un sandwich 25 compressé entre la gouttière 40 et le revêtement extérieur 2. Le sandwich 25 est formé d'une mousse inférieure 15 en contact avec une paroi interne de la gouttière 40, d'une mousse supérieure 20 en contact le revêtement extérieur 5, et d'un ensemble de fils 30 d'un harnais. Chaque fil est isolément compressé entre la mousse inférieure 15 et la mousse supérieure 20.

Les fils peuvent comprendre des brins électriques ou des fibres optiques notamment.

La figure 2 présente une coupe d'un tronçon du système de liaison 10.

Pour être attaché au revêtement extérieure 5, le système de liaison 10 est éventuellement muni d'un moyen de fixation 45 fixant la mousse supérieure 20 au revêtement extérieur 5. Le moyen de fixation 45 présenté sur la figure 2 comporte une couche d'un matériau adhésif telle qu'une couche de colle.

De même, le système de liaison 10 est éventuellement muni d'un dispositif de fixation 46 fixant la mousse inférieure 15 à la paroi interne 41 de la gouttière 40. Cette paroi interne représente la paroi de la gouttière 40 qui est en regard du revêtement extérieur 5. Le dispositif de fixation 46 présenté sur la figure 2 comporte une couche d'un matériau adhésif.

Enfin, le système de liaison 10 est muni d'un système de fixation 47 fixant la gouttière 40 au revêtement extérieur 5. Le système de fixation peut comprendre des visseries ou équivalent qui coopèrent avec des saillies de la gouttière 40 pour attacher la gouttière 40 de manière réversible au revêtement extérieur.

De plus, le système de liaison 10 présenté sur la figure comporte au moins un lien de maintien 80. Ce lien de maintien 80 permet de suspendre la gouttière 40 au revêtement extérieur 5 lorsque le système de fixation est inopérant, pour réaliser des actions de maintenance par exemple.

Par ailleurs, la figure 2 fait apparaître que l'ensemble de fils 30 peut être plat.

Dès lors, les fils sont contenus dans un plan P1. Ce plan P1 présentant une épaisseur EP au moins égale au diamètre DMAX du fil 30 de l'ensemble présentant le plus grand diamètre. On comprend que le plan P1 est conformé à la forme du revêtement extérieur, et peut donc présenter une certaine concavité comme le montre la figure 1. Le plan P1 est donc assimilable à un drap accolé au revêtement extérieur, les fils étant agencés dans l'épaisseur du drap les uns à côté des autres et jamais les uns au dessus des autres.

L'ensemble de fils est plat dans le sens ou cet ensemble ne présente qu'une couche de fils pour minimiser l'épaisseur 200 de la gouttière.

Les fils peuvent en outre être de nature et de dimensions différentes.

En référence à la figure 2, la couche de fils est alors coincée en élévation entre la mousse inférieure 15 et la mousse supérieure 20. Lorsque la gouttière 40 est fixée au revêtement 2, la mousse inférieure 15 peut d'ailleurs être en contact avec la mousse supérieure 20 dans des espaces inter-fils 300 séparant deux fils transversalement.

Dans ces conditions, chaque fil est indépendant des autres fils, et n'est en contact ni avec la gouttière 40 ni avec le revêtement extérieur 5. Le système de liaison tend donc à minimiser le phénomène d'usure des fils par frottement.

En référence à la figure 3, le système de liaison peut donc posséder un harnais 35 comprenant un ensemble de fils 30 plat. Ce harnais 35 peut comprendre des fils 30, mais aussi des connecteurs 100 usuels.

Par ailleurs, le système de liaison peut comprendre au moins un épingle 50 de cheminement pour maintenir les fils à plat les uns à côté des autres. Chaque épingle peut être réalisée avec un matériau « anti-chaffing », tel que le matériau PA66.

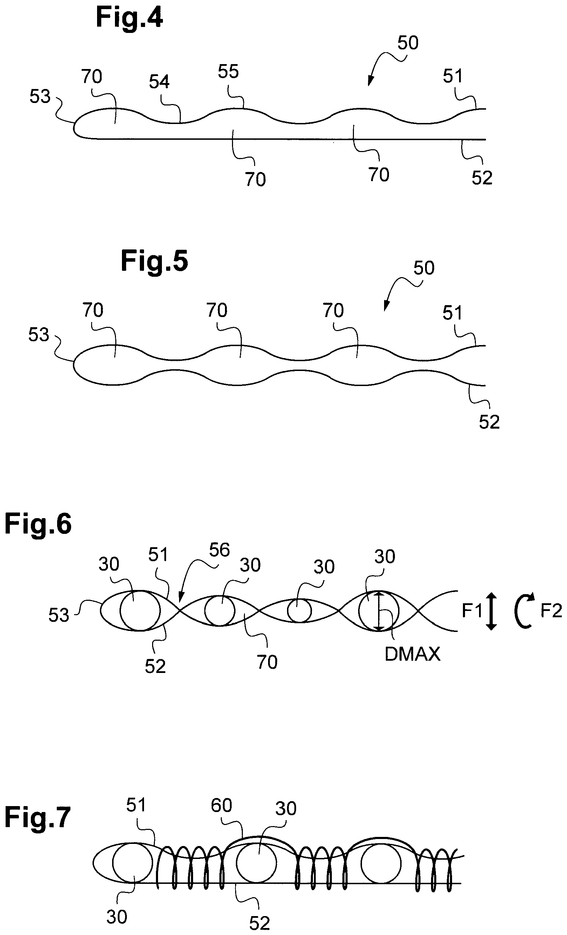

En référence à la figure 4, une épingle 50 peut avoir une forme de C en comportant deux branches 51, 52 qui sont reliées par un arc 53. L'arc 53 permet un déplacement relatif des branches 51, 52 en translation ou en torsion par exemple.

De plus, une branche de l'épingle peut présenter des corrugations, en étant munie d'une succession de creux 54 et de bosses 55. Cette succession de creux et de bosses permet de ménager des logements 70 entre les deux branches 51, 52, chaque logement pouvant accueillir un fil du harnais.

Selon la version de la figure 4, l'épingle comporte une branche 52 rectiligne et une branche ondulée 51.

Par contre, l'épingle présente deux branches 51, 52 ondulées selon la version de la figure 5. Favorablement, les ondulations des deux branches 51, 52 sont en inversion de phases pour former les logements 70.

Pour maintenir chaque fil dans un logement 70 et le séparer d'un fil adjacent, un opérateur peut selon la réalisation de la figure 6 déformer l'épingle. A cet effet, un opérateur introduit un fil dans l'épingle, puis déplace le branches l'une par rapport à l'autre en translation selon la flèche F1 ou en torsion selon la flèche 2 pour entrecroiser les deux branches 51, 52 en formant un croisillon 56. L'opérateur réitère alors successivement l'opération avec d'autres fils.

Ainsi, l'épingle présente une pluralité de croisillons 56, chaque croisillon séparant transversalement chaque fil d'un fil adjacent.

Selon une autre méthode illustrée sur la figure 7, un opérateur dispose les fils les uns à côté des autres entre les deux branches d'une épingle. Dès lors, l'opérateur tresse une frette 60 autour de l'épingle 50 pour séparer transversalement chaque fil d'un fil adjacent.

Pour fabriquer un tel système de liaison, un opérateur peut confectionner l'ensemble 35 de fils 30 sur une surface plane. A cet effet, l'opérateur positionne les fils de manière adéquate, met en place les éventuels connecteurs ainsi que les épingles 50 requises.

L'ensemble de fils est alors disposé entre les mousses inférieure 15 et supérieure 20, puis est comprimé entre ces mousses lors de la fixation de la gouttière 40 au revêtement extérieur 5.

Pour réaliser ces opérations, un opérateur peut fixer la mousse supérieure au revêtement extérieur 5, et la mousse inférieure à la gouttière 40. Cette gouttière peut être suspendue au revêtement extérieur 5 par au moins un lien de maintien.

Dès lors, l'opérateur dépose l'ensemble de fils dans la gouttière 40 sur la mousse inférieure 15. Cet opérateur manoeuvre alors la gouttière pour la fixer au revêtement extérieur 5.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système de liaison (10) muni d'un harnais comprenant un ensemble de fils (30),
ledit système de liaison (10) comporte un sandwich (25) enserrant lesdits fils (30), ledit système de liaison (10) comprenant une gouttière (40) de forme aérodynamique profilée, ledit sandwich (25) étant disposé dans ladite gouttière (40), **caractérisé en ce que** ledit système de liaison (10) comporte une mousse inférieure (15) et une mousse supérieure (20) formant le sandwich et chaque fil (30) étant compressé isolément entre la mousse supérieure (20) et une mousse inférieure (15), ledit système de liaison (10) étant muni d'un moyen de fixation (45) pour fixer ladite mousse supérieure (20) à un revêtement extérieur (5) d'un véhicule (1), ledit système de liaison (10) étant muni d'un dispositif de fixation (46) pour fixer ladite mousse inférieure (15) à une paroi interne (41) de ladite gouttière (40), ledit système de liaison (10) comportant au moins une épingle (50) de cheminement maintenant les fils (30) à plat les uns à côté des autres dans un plan (P1), ledit plan (P1) présentant une épaisseur (EP) supérieure ou égale au plus grand diamètre (DMAX) desdits fils (30), ladite épingle (50) ayant une forme de C en comportant deux branches (51, 52) reliées par un arc (53) permettant un déplacement relatif desdites branches (51, 52), au moins une branche (51, 52) présentant des corrugations (54, 55).

2. Système de liaison selon la revendication 1,
**caractérisé en ce que** ledit système de liaison (10) est muni d'un système de fixation (47) pour fixer ladite gouttière (40) à un revêtement extérieur (5) d'un véhicule (1).

3. Système de liaison selon l'une quelconque des revendications 1 à 2,
**caractérisé en ce que** ledit ensemble (35) de fils (30) est plat, les fils (30) étant contenus dans un plan (P1), ledit plan (P1) présentant une épaisseur (EP) supérieure ou égale au plus grand diamètre (DMAX) desdits fils (30).

4. Système de liaison selon l'une quelconque des revendications 1 à 3,
**caractérisé en ce que** lesdites deux branches (51, 52) s'entrecroisent en formant des croisillons (56), chaque croisillon (56) séparant transversalement chaque fil d'un fil adjacent.

5. Système de liaison selon l'une quelconque des revendications 1 à 4,
**caractérisé en ce que** ledit système de liaison (10) comporte une frette (60) tressée autour d'au moins une épingle (50), ladite frette (60) séparant transversalement chaque fil d'un fil adjacent.

6. Système de liaison selon l'une quelconque des revendications 1 à 5,
**caractérisé en ce que** ladite épingle (50) est réalisée à partir du matériau PA66.

7. Système de liaison selon l'une quelconque des revendications 1 à 6,
**caractérisé en ce que** ledit système de liaison (10) comporte au moins un lien de maintien (80) pour suspendre ladite gouttière (40) à un revêtement extérieur (5) d'un véhicule (1).

8. Véhicule (1) muni d'un revêtement extérieur (5) communiquant avec un milieu extérieur (EXT) situé à l'extérieur du véhicule (1), ledit véhicule (1) ayant au moins un système de liaison (10) fixé à ce revêtement extérieur (5),
**caractérisé en ce que** ledit système de liaison (10) est selon l'une quelconque des revendications 1 à 7, ladite gouttière (40) étant fixée audit revêtement extérieur (5), ledit sandwich (25) étant compressé entre ledit revêtement extérieur (5) et une paroi interne (41) de la gouttière (40).

9. Procédé de fabrication d'un système de liaison (10) d'un véhicule (1) selon la revendication 8 au cours duquel :
- on dispose les fils (30) entre la mousse inférieure (15) et la mousse supérieure (20) de manière à former un sandwich (25) agencé dans la gouttière (40),
- on comprime lesdits fils (30) entre la mousse inférieure (15) et la mousse supérieure (20) en fixant la gouttière (40) contre ledit revêtement extérieur (5).
**caractérisé en ce qu'**on dispose les fils (30) entre la mousse inférieure (15) et la mousse supérieure (20) de manière à former un sandwich (25) agencé dans la gouttière (40) en :
- fixant la mousse supérieure (20) au revêtement extérieur (5),
- fixant la mousse inférieure (15) sur une paroi interne (41) de la gouttière (40),
- disposant les fils (30) dans la gouttière (40),

10. Procédé selon la revendication 9,
**caractérisé en ce qu'**on confectionne un ensemble (35) de fils (30) plat en maintenant les fils (30) à plat les uns à côté des autres dans un plan (P1) à l'aide d'au moins une épingle (50) de cheminement, ledit plan (P1) présentant une épaisseur (EP) supérieure ou égale au plus grand diamètre (DMAX) desdits fils (30), puis on dispose cet ensemble (35) de fils (30) entre la mousse inférieure (15) et la mousse supérieure (20).

## Patentansprüche

1. Verbindungssystem (10) mit einem Kabelbaum, der eine Anordnung von Drähten (30) umfasst,
wobei das Verbindungssystem (10) ein Sandwich (25) umfasst, das die Drähte (30) umschließt,
wobei das Verbindungssystem (10) eine aerodynamisch geformte Rinne (40) umfasst, und das Sandwich (25) in der Rinne (40) angeordnet ist,
**dadurch gekennzeichnet, dass** das Verbindungssystem (10) einen unteren Schaum (15) und einen oberen Schaum (20) umfasst, die das Sandwich bilden, und dass jeder Draht (30) einzeln zwischen dem oberen Schaum (20) und einem unteren Schaum (15) eingeklemmt ist, dass das Verbindungssystem (10) mit einem Befestigungsmittel (45) zum Befestigen des oberen Schaums (20) an einer äußeren Verkleidung (5) eines Fahrzeugs (1) versehen ist, wobei das Verbindungssystem (10) mit einer Befestigungsvorrichtung (46) zum Befestigen des unteren Schaums (15) an einer Innenwand (41) der Rinne (40) versehen ist, wobei das Verbindungssystem (10) mindestens eine Führungs-Haarnadel (50) umfasst, die die Drähte (30) in einer Ebene (P1) flach nebeneinander hält, dass die Ebene (P1) eine Dicke (EP) aufweist, die größer als oder gleich dem größten Durchmesser (DMAX) der Drähte (30) ist, dass die Haarnadel (50) eine C-förmige Gestalt aufweist, die zwei Zweige (51, 52) umfasst, die durch einen Bogen (53) verbunden sind, der eine relative Verschiebung der Zweige (51, 52) ermöglicht, wobei mindestens ein Zweig (51, 52) Wellungen (54, 55) aufweist.

2. Verbindungssystem nach Anspruch 1,
**dadurch gekennzeichnet, dass** das Verbindungssystem (10) mit einem Befestigungssystem (47) zum Befestigen der Rinne (40) an einer äußeren Verkleidung (5) eines Fahrzeugs (1) versehen ist.

3. Verbindungssystem nach einem der Ansprüche 1 bis 2,
**dadurch gekennzeichnet, dass** der Satz (35) von Drähten (30) eben ist, dass die Drähte (30) in einer Ebene (P1) enthalten sind, und dass die Ebene (P1) eine Dicke (EP) aufweist, die größer als oder gleich dem größten Durchmesser (DMAX) der Drähte (30) ist.

4. Verbindungssystem nach einem der Ansprüche 1 bis 3,
**dadurch gekennzeichnet, dass** sich die beiden Zweige (51, 52) einander kreuzen und dabei Überkreuzungen bilden, wobei jede Überkreuzung (56) jeden Draht in Querrichtung von einem benachbarten Draht trennt.

5. Verbindungssystem nach einem der Ansprüche 1 bis 4,
**dadurch gekennzeichnet, dass** das Verbindungssystem (10) eine Umwicklung (60) umfasst, die um mindestens eine Haarnadel (50) geschlungen ist, wobei die Umwicklung (60) jeden Draht in Querrichtung von einem benachbarten Draht trennt.

6. Verbindungssystem nach einem der Ansprüche 1 bis 5,
**dadurch gekennzeichnet, dass** die Haarnadel (50) aus dem Material PA66 hergestellt ist.

7. Verbindungssystem nach einem der Ansprüche 1 bis 6,
**dadurch gekennzeichnet, dass** das Verbindungssystem (10) mindestens eine Halteverbindung (80) zum Aufhängen der Rinne (40) an einer äußeren Verkleidung (5) eines Fahrzeugs (1) umfasst.

8. Fahrzeug (1) mit einer äußeren Verkleidung (5), die mit einer äußeren Umgebung (EXT) außerhalb des Fahrzeugs (1) in Verbindung steht, wobei das Fahrzeug (1) mindestens ein Verbindungssystem (10) aufweist, das an dieser äußeren Verkleidung (5) befestigt ist, **dadurch gekennzeichnet, dass** das Verbindungssystem (10) nach einem der Ansprüche 1 bis 7 ist, dass die Rinne (40) an der äußeren Verkleidung (5) befestigt ist, und dass das Sandwich (25) zwischen der äußeren Verkleidung (5) und einer Innenwand (41) der Rinne (40) komprimiert ist.

9. Verfahren zur Herstellung eines Verbindungssystems (10) für ein Fahrzeug (1) nach Anspruch 8, bei dem:
- die Drähte (30) zwischen dem unteren Schaum (15) und dem oberen Schaum (20) angeordnet werden, um ein in der Rinne (40) angeordnetes Sandwich (25) zu bilden,
- die Drähte (30) zwischen dem unteren Schaum (15) und dem oberen Schaum (20) eingeklemmt werden, indem die Rinne (40) an dem äußeren Überzug (5) befestigt wird,
**dadurch gekennzeichnet, dass** die Drähte (30) zwischen dem unteren Schaum (15) und dem oberen Schaum (20) eingeklemmt werden, um ein in der Rinne (40) liegendes Sandwich (25) zu bilden, indem:
- der obere Schaumstoff (20) an der äußeren Verkleidung (5) befestigt wird,
- der untere Schaumstoff (15) an einer Innenwand (41) der Rinne (40) befestigt wird,
- die Drähte (30) in der Rinne (40) platziert werden.

10. Verfahren nach Anspruch 9,
**dadurch gekennzeichnet, dass** eine ebene Anordnung (35) von Drähten (30) hergestellt wird, indem die Drähte (30) in einer Ebene (P1) unter Verwendung mindestens einer Führungs-Haarnadel (50) flach nebeneinander gehalten werden, wobei die Ebene (P1) eine Dicke (EP) aufweist, die größer oder gleich dem größten Durchmesser (DMAX) der Drähte (30) ist, und dann diese Anordnung (35) von Drähten (30) zwischen dem unteren Schaum (15) und dem oberen Schaum (20) angeordnet wird.

## Claims

1. Connection system (10) equipped with a harness comprising an assembly of wires (30), the said connection system (10) comprises a sandwich (25) enclosing the said wires (30), the said connection system (10) comprising a trough (40) with a streamlined aerodynamic shape, the said sandwich (25) being arranged in the said trough (40), **characterised in that** the said connection system (10) comprises a lower foam (15) and an upper foam (20) forming the sandwich and each wire (30) being compressed in isolation between the upper foam (20) and a lower foam (15), the said connection system (10) being equipped with an attachment means (45) for attaching the said upper foam (20) to an exterior casing (5) of a vehicle (1), the said connection system (10) being equipped with an attachment device (46) for attaching the said lower foam (15) to an internal wall (41) of the said trough (40), the said connection system (10) comprising at least one routing pin (50) keeping the wires (30) flat next to one another in a plane (P1), the said plane (P1) having a thickness (EP) greater than or equal to the largest diameter (DMAX) of the said wires (30), the said pin (50) having a C shape by comprising two branches (51, 52) linked by an arc (53) enabling relative movement of the said branches (51, 52), at least one branch (51, 52) having corrugations (54, 55).

2. Connection system according to claim 1, **characterised in that** the said connection system (10) is equipped with an attachment system (47) for attaching the said trough (40) to an exterior casing (5) of a vehicle (1).

3. Connection system according to any one of claims 1 to 2, **characterised in that** the said assembly (35) of wires (30) is flat, the wires (30) being contained in a plane (P1), the said plane (P1) having a thickness (EP) greater than or equal to the largest diameter (DMAX) of the said wires (30).

4. Connection system according to any one of claims 1 to 3, **characterised in that** the said two branches (51, 52) intersect by forming crosses (56), each cross (56) transversely separating each wire from an adjacent wire.

5. Connection system according to any one of claims 1 to 4, **characterised in that** the said connection system (10) comprises a band (60) wound around at least one pin (50), the said band (60) transversely separating each wire from an adjacent wire.

6. Connection system according to any one of claims 1 to 5, **characterised in that** the said pin (50) is made of the material PA66.

7. Connection system according to any one of claims 1 to 6, **characterised in that** the said connection system (10) comprises at least one retention link (80) for suspending the said trough (40) from an exterior casing (5) of a vehicle (1).

8. Vehicle (1) equipped with an exterior casing (5) communicating with an external environment (EXT) located outside the vehicle (1), the said vehicle (1) having at least one connection system (10) attached to this exterior casing (5), **characterised in that** the said connection system (10) is according to any one of claims 1 to 7, the said trough (40) being attached to the said exterior casing (5), the said sandwich (25) being compressed between the said exterior casing (5) and an internal wall (41) of the trough (40).

9. Method for manufacturing a connection system (10) for a vehicle (1) according to claim 8 in which:
- the wires (30) are arranged between the lower foam (15) and the upper foam (20) in such a way as to form a sandwich (25) disposed in the trough (40),
- the said wires (30) are compressed between the lower foam (15) and the upper foam (20) by securing the trough (40) against the said exterior casing (5),
**characterised in that** the wires (30) are arranged between the lower foam (15) and the upper foam (20) in such a way as to form a sandwich (25) disposed in the trough (40) by:
- attaching the upper foam (20) to the exterior casing (5),
- attaching the lower foam (15) to an internal wall (41) of the trough (40),
- arranging the wires (30) in the trough (40).

10. Method according to claim 9, **characterised in that** a flat assembly (35) of wires (30) is made by keeping the wires (30) flat next to one another in a plane (P1) using at least one routing pin (50), the said plane (P1) having a thickness (EP) greater than or equal to the largest diameter (DMAX) of the said wires (30), then this assembly (35) of wires (30) is arranged between the lower foam (15) and the upper foam (20).
